Europäisches Patentamt

(19) European Patent Office

Office européen des brevets

(11) Veröffentlichungsnummer: **0 087 784**
**B1**

(12) **EUROPÄISCHE PATENTSCHRIFT**

(45) Veröffentlichungstag der Patentschrift:
24.06.87

(21) Anmeldenummer: 83101875.9

(22) Anmeldetag: 25.02.83

(51) Int. Cl.⁴: **H 04 Q 3/00**

(54) **Teilnehmeranschlussschaltung mit niedrigohmig überbrückbaren Speisewiderständen und einer unterschiedliche Indikationen durchführenden Indikationsschaltung.**

(30) Priorität: 01.03.82 DE 3207318

(43) Veröffentlichungstag der Anmeldung:
07.09.83 Patentblatt 83/36

(45) Bekanntmachung des Hinweises auf die Patenterteilung:
24.06.87 Patentblatt 87/26

(84) Benannte Vertragsstaaten:
AT CH FR GB IT LI NL SE

(56) Entgegenhaltungen:
EP - A - 0 026 411

ELECTRICAL COMMUNICATION, Band 44, Nr. 4, 1969,
Seiten 340-347, London, GB; D. FISCHBUCH et al.:
"Balanced electronic receiver for loop signaling"

(73) Patentinhaber: **Siemens Aktiengesellschaft Berlin und München, Wittelsbacherplatz 2, D-8000 München 2 (DE)**

(72) Erfinder: **Kopetzky, Horst, Lannerstrasse 11, D-8025 Unterhaching (DE)**
Erfinder: **Nagler, Werner, Dipl.-Ing., Lipowskystrasse 8, D-8000 München 70 (DE)**
Erfinder: **Ossler, Walter, Dipl.-Ing., Wallbergstrasse 38, D-8034 Germering (DE)**

## Beschreibung

Die Erfindung betrifft eine Teilnehmeranschlussschaltung zum amtsseitigen Abschluss der Teilnehmeranschlussleitung mit niederohmig überbrückbaren Speisewiderständen, über die die Leitungsadern der Teilnehmeranschlussleitung je nach Betriebszustand hoch- oder niederohmig an einen der beiden Pole der Speisespannungsquelle angeschlossen sind, ferner mit einer durch Bewertung des Potentialzustandes an leitungsadernbezogenen festen. Ankopplungspunkten mehrere unterschiedliche Indikationen durchführenden Indikationsschaltung, bei der dementsprechend unterschiedliche Ansprechschaltschwellen wirksam geschaltet sind, der ferner bei der Durchführung bestimmter Indikationen ein Siebglied nachgeschaltet ist, so dass verschiedene durch die Art der Speisung, die Ansprechschwelle der Indikationsschaltung, das Auftreten der Rufwechselspannung und die Wirksamschaltung des Siebgliedes charakterisierte vermittlungstechnische Betriebsarten angenommen werden, und die vorzugsweise für die Bedienung mehrerer Teilnehmeranschlussschaltungen ausgenutzt wird.

Bei einer derartigen Teilnehmeranschlussschaltung (DE-A-2 939 009 $\approx$ EP-A-0 026 411) kann gewährleistet werden, dass die Speisestromquelle einer Fernsprechvermittlungsstelle, die mehrere Teilnehmeranschlussschaltungen bedient, nicht überlastet wird, da nicht in allen Betriebszuständen der maximale Speisestrom aufgenommen wird. Es liegen bei dieser Teilnehmeranschlussschaltung im Ruhezustand hochohmige Widerstände im Speisestromkreis, wobei der dann noch fliessende Speisestrom ausreicht, eine Anreizindikation zu ermöglichen. Im Gesprächszustand und in der Ruhephase sind diese hochohmigen Speisewiderstände zumindest im Falle des in der einen Leitungsader der Teilnehmerschlussleitung liegenden Widerstandes überbrückt, so dass der volle oder zumindest ein höherer Speisestrom als im Ruhezustand fliessen kann.

Es ist bei dieser Teilnehmeranschlussleitung ferner möglich, zu verhindern, dass eine überlange Erdtastenbetätigung im Teilnehmerapparat zu einer Überlastung der im Speisestromkreis liegenden Schaltelemente führt, da in einem solchen Falle wieder von der niederohmigen Speisung auf die hochohmige Speisung umgeschaltet wird.

Bei der genannten bekannten Schaltungsanordnung können einzelne Indikationen trotz der bei verschiedenen Betriebszuständen unterschiedlichen Speiseverhältnisse und trotz der unterschiedlichen Anforderungen an die Auswertegeschwindigkeit mit einer einzigen Indikationsschaltung durchgeführt werden, indem jeweils entsprechende unterschiedliche Ansprechschaltschwellen bei dieser Indikationsschaltung wirksam geschaltet werden. Es sind insgesamt zwei Indikationsschaltungen vorgesehen, die zwei sich aneinander bedingenden Bewertungsgruppen von Indikationsfällen zugeordnet sind. Ein Siebglied, das bei bestimmten Indikationen den Indikationsschaltungen nachgeschaltet ist, sorgt dabei für eine Erhöhung der Auswertesicherheit.

Insbesondere bei der Indikation eines Schleifenschlusses aufgrund eines Rufs kommt es darauf an, dass das Indikationsergebnis möglichst schnell nach dem Augenblick des Schleifenschlusses vorliegt, da bei z. B. geschlossener Teilnehmerschleife das Kohlemikrofon des Teilnehmerapparates von dem durch den Rufwechselstrom überlagerten Speisestrom durchflossen wird, womit die Gefahr einer Überlastung besteht und demnach möglichst unmittelbar nach Schleifenschluss eine Rufabschaltung vorgenommen werden muss.

Das bedeutet, dass ein Interesse daran besteht, auch einen während einer Rufpause erfolgenden Schleifenschluss möglichst bald zu erkennen um die erforderlichen Schaltmassnahmen einleiten zu können.

Bei der vorgenannten Schaltungsanordnung wird die Rufphase und die Rufpause als ein und dieselbe vermittlungstechnische Betriebsart behandelt, die sich steuerungstechnisch lediglich dadurch unterscheiden, dass in der Rufphase das Rufrelais, über den die Rufspannung angelegt wird, angezogen hat, in der Rufpause dagegen abgefallen ist. Es erfolgt also auch keine Umschaltung des Schaltgliedes, über das dort während der verschiedenen Betriebszustände die Schwellspannungen an die Indikationsschaltung gelegt werden. Da im Betriebszustand Rufphase/Rufpause die Vorspannung über einen Spannungsteiler zugeführt wird, an dem während der Rufphase die von der Rufwechselspannung gelagerte Speisespannung und in der Rufpause die Speisespannung allein anliegt, ergibt sich jedoch in der Rufpause ein unzutreffender Schwellwert, so dass ein Ansprechen der Indikationsschaltung verhindert ist. Es ist auch schon vorgeschlagen worden, in der Rufpause dieselben Verhältnisse einzustellen wie im Betriebszustand «Gespräch/Wahlaufnahme», in dem das Siebglied nicht wirksam geschaltet ist. Es kann dann jedoch beim Wechsel von der Rufphase zur Rufpause infolge von Störimpulsen und Ausgleichsvorgängen auf der Leitung zu einem fälschlichen Ansprechen der Indikationsschaltung kommen.

Die Aufgabe der vorliegenden Erfindung besteht nun darin, bei einer Schaltungsanordnung der eingangs genannten Art die Auswertesicherheit im Rufbetrieb auch bei Einsatz nur einer einzigen Indikationsschaltung für sämtliche Indikationsfälle zu erhöhen.

Diese Aufgabe wird erfindungsgemäss dadurch gelöst, dass die Rufphase und die Rufpause zwei getrennte Betriebsarten darstellen, wobei die Betriebsart Rufpause bezüglich der Speisung und der Ansprechschwelle der Indikationsschaltung der Betriebsart Gespräch/Wahlaufnahme gleicht, im Gegensatz zu dieser jedoch mit wirksam geschaltetem Siebglied durchgeführt wird.

Aufgrund der erfindungsgemässen Lehre wird in der Rufphase für die Indikationsschaltung ein Schwellwert wirksam geschaltet, der dem Auftreten des Summenstroms aus Rufwechselstrom und Speisegleichstrom im Falle eines Schleifenschlusses entspricht, wobei der Siebkondensator wirksam geschaltet ist, um Fehlauswertungen zu vermeiden, während der Rufpause dagegen ist dieselbe Schwellspannung wirksam wie im Be-triebszustand-Gespräch/Wahlaufnahme, in Ab-weichung von diesem Betriebszustand ist jedoch der Siebkondensator wirksam geschaltet, der in dem genannten Betriebszustand-Gespräch/Wahlaufnahme zu einer Verfälschung der Wahlkennzeichen führen würde. Hierdurch kann auch während der Rufpause das Auftreten eines Schleifenschlusses erkannt werden, wobei sichergestellt ist, dass Fehlströme, die aufgrund von nach dem Übergang von der Rufphase in die Rufpause auf der Teilnehmeranschlussleitung verbliebenen Ladungen entstehen, nicht fälschlicherweise zu einer Schleifenschlussanzeige führen können.

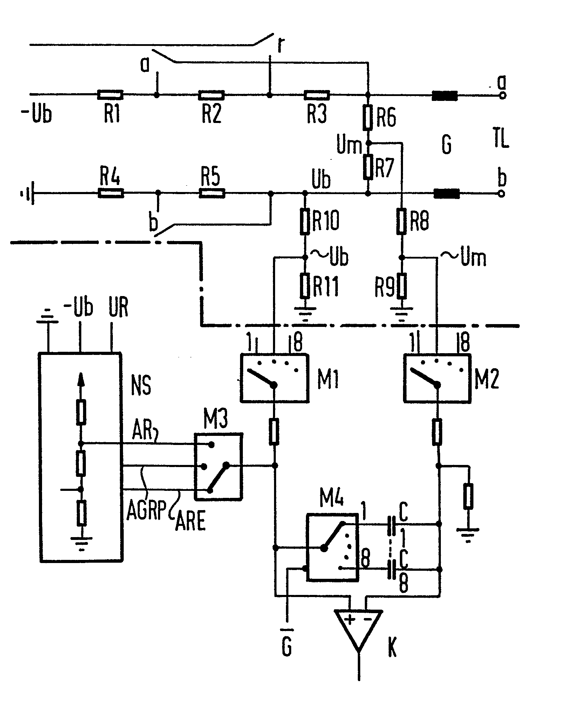

Nachstehend wird die Erfindung anhand eines Ausführungsbeispiels unter Bezugnahme auf die Zeichnung näher erläutert, die eine Teilnehmeranschlussschaltung in zum Verständnis der Erfindung erforderlichen Umfang zeigt.

In der Figur sind im oberhalb der strichpunktierten Linie befindlichem Teil im wesentlichen die mit der Speisung im Zusammenhang stehenden Teile der Teilnehmeranschlussschaltung dargestellt. Es sind dies die Speisewiderstände R1 bis R5, von denen die Speisewiderstände R1 bis R3 zwischen dem einen Pol einer Speisebatterie und der a-Ader der Teilnehmeranschlussleitung TL liegen, die von der Teilnehmeranschlussschaltung abgeschlossen wird. Die Widerstände R1 und R3 sind niederohmig, der Widerstand R2 ist hochohmig. Der niederohmige Widerstand R4 und der hochohmige Widerstand R5 liegen zwischen dem anderen Pol der Speisespannungsquelle und dem Anschluss b-Ader der Teilnehmeranschlussleitung.

Die Widerstände R2 und R3 einerseits sowie der Widerstand R5 andererseits sind durch Betätigung von Kontakten a und b nicht dargestellter Relais A und B niederohmig überbrückbar.

Die Figur zeigt ferner den Kontakt r eines ebenfalls nicht dargestellten Relais R, über den zwischen den Widerständen R2 und R3, die von einer nicht dargestellten Rufspannungsquelle gelieferte Rufwechselspannung eingespeist werden kann.

Im oberen Teil der Figur sind ferner die zweidrahtseitigen Teile einer Gabelschaltung G für den Zweidraht-Vierdraht-Übergang dargestellt.

Als Bezugspunkt für die Bewertung der Potentialzustände an den Adern der Teilnehmeran-schlussleitung, die die einzelnen Betriebszustän-de kennzeichnen, dient einmal der Verbindungspunkt zweier Widerstände R6 und R7, die einen hochohmigen Querzweig zwischen den Leitungsadern bilden und zum anderen der dem einen Pol (Erdpotential) der Speisungsspannungsquelle abgewendete Anschluss des an der b-Ader liegenden Speisewiderstandes R5. Die an diesen Ankoppelpunkten Um und Ub auftretenden Potentiale werden über durch die Widerstände R8 und R9 bzw. R10 und R11 gebildete Spannungsteiler an den der Auswertung dienenden, unterhalb der strichpunktierten Linie dargestellten Teil der Teilnehmeranschlussschaltung weitergegeben.

Die eigentliche Auswerteschaltung wird durch einen Komparator K gebildet, der zur Durchführung sämtlicher Indikationen vorgesehen ist und ausserdem mehrere, beispielsweise acht Teilneh-meranschlussschaltungen bedient.

Die Weitergabe der Potentiale an den Ankoppelpunkten Um und Ub erfolgt dementsprechend über Selektoren M1 und M2, über die wahlweise Verbindungen zwischen den Teilerpunkten der Spannungsteiler R8/R9 und R10/R11 einer der bedien-ten Teilnehmeranschlussschaltungen und dem in-vertierenden Eingang des Komparators K hergestellt werden.

Der Auswerteteil der dargestellten Teilnehmeranschlussschaltung enthält ferner ein Netzwerk NS, durch das unterschiedliche Schwellspannungen für die Auswerteschaltung K erzeugt werden, je nachdem, welche Indikation durchgeführt werden soll. Die Ausgänge AR, AG/RP und ARE dieses Netzwerkes, an denen unterschiedliche Schwellspannungen auftreten, können über einen weiteren Selektor M3 wahlweise mit dem nichtinvertierenden Eingang des die Auswerteschaltung bildenden Komparators K verbunden werden.

Die Schaltungsanordnung enthält ferner einen weiteren Selektor M4 mit dessen Hilfe wahlweise einer von Kondensatoren C1 bis C8 den Eingängen des Komparators K parallel geschaltet werden kann, je nachdem welche Teilnehmeranschlussschaltung der Komparator gerade bedient. Die Kondensatoren bilden Siebglieder mit Tief-passcharakteristik, die verhindern, dass Fehlindi-kationen durch den Komparator K erfolgen. Durch den Eingang $\bar{G}$ des Selektors M4 soll angedeutet sein, dass im Betriebszustand Gespräch/Wahlaufnahme der Selektor nicht durchgängig ist, also auch kein Siebglied wirksam gestaltet ist.

Nachstehend wird auf die Betriebsweise der dargestellten erfindungsgemässen Schaltungsanordnung näher eingegangen.

Wie schon angedeutet, kann diese Schaltungsanordnung vier verschiedene durch die Art der Speisung, die Ansprechschwelle der Indikations-schaltung, das Auftreten der Rufwechselspan-nung und die Wirksamschaltung des Siebgliedes charakterisierte vermittlungstechnische Betriebsarten annehmen.

In der Betriebsart «Ruhe» ist keines der Relais A, B und R erregt, was bedeutet, dass eine hochohmige Speisung vorliegt und keine Rufwechselspannung zugeführt wird. Über den Selektor M3 ist der Ausgang AR des Schaltschwellennetzwertes NS mit dem nichtinvertierten Eingang des Komparators verbunden, womit eine für die Anreizindikation massgebliche Schwelle wirksam ist. Ausserdem ist der betreffende der Kondensatoren C1 bis C8 wirksam geschaltet.

Im Betriebszustand «Gespräch/Wahlaufnahme» sind die beiden Relais A und B erregt, so dass die hochohmigen Teile der Speisewiderstände kurzgeschlossen sind, also niederohmige Speisung vorliegt, das Relais R ist nicht erregt. Über den Selektor M3 ist nunmehr der Ausgang AGRP des Schaltschwellennetzwerkes NS auf den nichtinvertierenden Komparatoreingang geschaltet, womit die Auswerteschaltung als Schleifenindikationsschaltung arbeitet. Der Selektor M4 ist in diesem Fall gesperrt mit der Folge, dass während dieses Betriebszustandes ein Siebglied nicht wirksam ist, womit verhindert ist, dass die Wahlkennzeichen verzerrt werden.

Im Betriebszustand «Rufphase» sind die Relais B und R erregt. Das bedeutet, dass ein höherer Speisestrom als im Betriebszustand «Ruhe» fliesst, und dass der über den Kontakt r des Relais R eingespeiste Rufwechselstrom niederohmig an die Teilnehmeranschlussleitung gelangt, gleichzeitig aber verhindert ist, dass wesentliche Teile desselben über die Speisebatterie abliessen. Über den Selektor M3 ist nunmehr der Ausgang ARE an den einen Komparatoreingang gelegt, womit eine entsprechende, den Verhältnissen bei Schleifenschluss während der Rufphase angepasste Anschaltschwelle der Auswerteschaltung wirksam wird. Das entsprechende Siebglied ist in diesem Betriebszustand wirksam geschaltet.

In der vierten vermittlungstechnischen Betriebsart «Rufpause», die sich, wie angegeben, von der Betriebsart «Rufphase» unterscheidet, ist der Erregungszustand der Relais A, B und R derselbe wie im Betriebszustand «Gespräch», es liegt also niederohmige Speisung vor. Im Gegensatz zum Betriebszustand «Rufphase» ist der Ausgang AGRP mit dem einen Komparatoreingang verbunden, es ist also dieselbe Ansprechschwelle wie im Betriebszustand «Gespräch/Wahlaufnahme» wirksam. Im Gegensatz zum letztgenannten Betriebszustand ist jetzt jedoch das betreffende Siebglied wirksam geschaltet. Hierdurch ist gewährleistet, dass auch im Betriebszustand «Rufpause» ein Schleifenschluss erkannt wird, und Fehlindikationen weitgehend vermieden sind.

Jeder der vier Betriebszustände wird durch ein zwei Bit umfassendes von der zentralen Steuerung erzeugtes Steuerwort gekennzeichnet, das einer Dekodierlogik zugeführt wird, die die Relais A, B, R und die Selektoren M3 und M4 entsprechend beeinflusst.

## Patentanspruch

1. Teilnehmeranschlussschaltung zum amtsseitigen Abschluss einer Teilnehmeranschlussleitung (TL) mit niederohmig überbrückbaren Speisewiderständen (R2, R5), über die die Leitungsadern (a, b) der Teilnehmeranschlussleitung je nach Betriebszustand hoch- oder niederohmig an einen der beiden Pole (-Ub, Erde) der Speisespannungsquelle angeschlossen sind, ferner mit einer durch Bewertung des Potentialzustandes an leitungsadernbezogenen festen Ankoppelpunkten mehrere unterschiedliche Indikationen durchführenden Indikationsschaltung (K), bei der dementsprechend unterschiedliche Ansprechschaltschwellen wirksam geschaltet sind, der ferner bei der Durchführung bestimmter Indikationen ein Siebglied (C1 bis C8) nachgeschaltet ist, so dass demnach verschiedene durch die Art der Speisung, die Ansprechschwelle der Indikationsschaltung, das Auftreten der Rufwechselspannung und die Wirksamschaltung des Siebgliedes charakterisierte vermittlungstechnische Betriebsarten angenommen werden, und die vorzugsweise für die Bedienung mehrerer Teilnehmeranschlussschaltungen ausgenutzt wird, dadurch gekennzeichnet, dass die Rufphase und die Rufpause zwei getrennte Betriebsarten darstellen, wobei die Betriebsart Rufpause bezüglich der Speisung und der Ansprechschwelle der Indikationsschaltung (K) der Betriebsart Gespräch/Wahlaufnahme gleicht, im Gegensatz zu dieser jedoch mit wirksam geschaltetem Siebglied (C1 bis C8) durchgeführt wird.

## Claim

1. A subscriber line circuit for terminating a subscriber line (TL) at the exchange end, comprising feed resistors (R2, R5) which can be bridged in low-ohmic fashion and via which the line wires (a, b) of the subscriber line are connected, depending upon the operating state, in high-ohmic or low-ohmic fashion to one of the two poles (-Ub, earth) of the feed voltage source, also comprising an indication circuit (K) which, by evaluating the potential state prevailing at fixed coupling points related to line wires, performs a plurality of indications, in which different response switching thresholds are actuated accordingly, which is connected at its output to a filter element (C1 to C8) for the implementation of specification indications so that, accordingly, various switching-orientated operating modes are assumed, characterised by the mode of the feed, the response threshold of the indication circuit, the occurrence of the ringing ac voltage and the actuation of the filter element, and which preferably services a plurality of subscriber line circuits, characterised in that the ringing phase and the ringing interval represent two separate operating modes, where the operating mode of ringing interval is identical to the operating mode of conversation/dialling code acceptance in respect of the feed and response threshold of the indication circuit (K), but in contrast to this the operating mode is performed with the filter element (C1 to C8) actuated.

## Revendication

1. Circuit d'abonné servant à réaliser la terminaison, côté central, d'une ligne d'abonné (TL) comportant des résistances d'alimentation (R2, R5) pouvant être shuntées par voie faiblement ohmique, et par l'intermédiaire desquelles les conducteurs (a, b) de la ligne d'abonné sont raccordés selon une liaison à forte ou à faible valeur ohmique en fonction de l'état de fonctionnement, à l'un des deux pôles (-Ub, terre) de la source de tension d'alimentation, et comportant, en outre, un circuit indicateur (K) qui fournit plusieurs indications différentes sur la base d'une évaluation de l'état de potentiel au niveau des points fixes de couplage, liés aux conducteurs de la ligne, et pour lequel, de façon correspondante, différents seuils de commutation de réponse sont rendus actifs et en aval duquel se trouve en outre branché lors de la délivrance d'indications déterminées, un circuit de lissage (C1 à C8), de telle sorte que l'on peut obtenir par conséquent différents types de fonctionnement du point de vue de la technique de commutation, caractérisés par le type d'alimentation, le seuil de réponse du circuit indicateur, l'apparition de la tension alternative d'appel et le circuit de branchement à l'état actif du circuit de lissage, et qui est utilisé de préférence pour desservir plusieurs circuits d'abonnés, caractérisé par le fait que la phase d'appel et la pause entre appels représentent deux types de fonctionnement séparés, le type de fonctionnement représentant la pause entre appels étant identique, du point de vue de l'alimentation et du seuil de réponse du circuit indicateur (K), au type de fonctionnement conversation/réception de sélection, mais est exécuté, contrairement à ce type de fonctionnement, avec le circuit de lissage (C1 à C8) branché à l'état actif.